# EUROPÄISCHE PATENTSCHRIFT

(11) **EP 1 829 908 B1**
(45) Veröffentlichungstag und Bekanntmachung des Hinweises auf die Patenterteilung: **14.01.2009**
(21) Anmeldenummer: 07000482.5
(22) Anmeldetag: 11.01.2007
(51) Int. Cl.: C08G 18/10, C08G 18/12, C08J 9/04, C08J 9/12

(54) **Schaumstoffsysteme, Kits und deren Verwendung**
Foaming systems, kits and their use
Systèmes gonflants, kits and leur utilisation

(30) Priorität: 03.03.2006 DE 102006009758
(43) Veröffentlichungstag der Anmeldung: 05.09.2007
(73) Patentinhaber: fischerwerke GmbH & Co. KG, 72178 Waldachtal (DE)
(72) Erfinder: Grün, Jürgen, 79268 Bötzingen (DE); Schlenk, Christian, 79211 Denzlingen (DE); Vogel, Martin, 79286 Glottertal (DE)
(74) Vertreter: Suchy, Ulrich Johannes

(56) Entgegenhaltungen:
- WO-A-20/04104078
- DE-A1- 4 038 401
- DE-A1- 10 347 659

## Beschreibung

Die Erfindung betrifft Schaumstoffsysteme und/oder Kits für Schaumstoffe auf Basis von alkoxysilanterminierten Präpolymeren, deren Verwendung zur Herstellung von isocyanatfreien Schaumstoffen und die Verwendung von Gasbildnern bei der Herstellung der besagten Schaumstoffe und/oder Kits. Die genannten Schaumstoffsysteme und/oder Kits und die Verwendungen wie auch die Schaumstoffe sind beispielsweise für den Baubereich oder andere Bereiche, in denen Schaumstoffe sinnvoll eingesetzt werden können, von Nutzen, beispielsweise zum Ausfüllen von Hohlräumen, zum Abdichten oder zur Wärmedämmung, so dass entsprechende Verfahren auch Gegenstand der Erfindung sind.

Bekannt sind schäumbare Mischungen auf Basis von Polyurethanen mit Präpolymeren, die eine hohe Konzentration von Isocyanatgruppen, aufweisen. Durch Reaktion mit geeigneten Reaktionspartnern wie Wasser und/oder Polyolen können diese bereits bei Raumtemperatur Reaktionen eingehen, die eine Aushärtung des Sprayschaums ermöglichen. Die Aufschäumung wird dabei durch in Sprühdosen zugegebene Treibgase und/oder durch Kohlendioxid, das bei der Reaktion mit Wasser entsteht, bewirkt. Bei der Reaktion mit Wasser entstehen neben dem Kohlendioxid aus den Isocyanatgruppen Aminogruppen, die an andere Isocyanatgruppen addiert werden können und so zur Aushärtung beitragen oder diese gegebenenfalls alleine bewirken können.

Um toxikologischen Bedenken gegenüber den isocyanatgruppenhaltigen Polyurethanvorstufen Rechnung zu tragen, wurden alkoxysilanterminierte Polyurethanpräpolymere entwickelt, wie beispielsweise in WO 2004/083271, DE 101 40 132, WO 2004/092259, WO 2005/000931 und WO 2004/104078 beschrieben, wobei die genannten Schriften hier, insbesondere bezüglich der darin genannten alkoxysilanterminerten Präpolymeren und deren Herstellung, durch Bezugnahme aufgenommen werden. Derartige alkoxysilanterminierte Präpolymere sowie gegebenenfalls vorhandene Reaktivverdünner können unter Einwirkung geeigneter Katalysatoren in Gegenwart von Wasser (beispielsweise aus Luftfeuchtigkeit oder Feuchtigkeit von der Umgebung, z.B. aus Mauerwerk oder dergleichen) unter Abspaltung der Alkoholkomponente (z.B. Methanol) miteinander kondensieren (unter Bildung von Si-O-Si-Brücken) und so aushärten.

Für die Herstellung der Schäume werden in entsprechenden Sprühdosen Treibmittel (wie Propan/Butan oder andere leichtflüchtige Kohlenwasserstoffe, Ether, fluorierte Treibmittel oder dergleichen) verwendet. Die Verwendung dieser Treibgase kann zu Problemen führen - beispielsweise können sie ökologisch bedenklich sein, es kann zu Entmischungen aufgrund schlechter Löslichkeit der alkoxysilanterminierten Präpolymeren oder weiterer vorhandener Komponenten kommen, es muss hinreichender Schutz gegen Explosion vorgesehen sein, da die Sprühbehälter ständig unter Druck stehen, und es kann zu zunehmender Abkühlung des Sprühdoseninhalts beim Sprühen aufgrund der nötigen Energieaufnahme des Treibmittels kommen, was über die Zeit zu ungleichmäßigen Schäumen führen kann. Das zur Härtung (Polymerisation) benötigte Wasser kann, da sonst die Reaktion bereits in der Dose stattfinden würde, nur durch Luftfeuchtigkeit oder durch Kontakt mit Wasser aus dem besprühten Substrat zuführbar sein, was ein nur langsames und möglicherweise ungleichmäßiges Aushärten zur Folge haben kann.

Vor diesem Hintergrund besteht die Aufgabe der Erfindung darin, es zu ermöglichen, Systeme und/oder Vorrichtungen für die Herstellung von Schaumstoffen zur Verfügung zu stellen, die ein rasches Aushärten, die Vermeidung der Schwierigkeiten mit zugesetzten leichtflüchtigen Treibmitteln samt der damit verbundenen Sicherheitsvorkehrungen, eine hinreichend gleichmäßige Durchmischung der benötigten Reaktionskomponenten, das Vermeiden von Problemen wegen einer unzureichenden Löslichkeit verschiedener Komponenten ineinander, ein Fehlen von Temperaturänderungen während des Austreibens und/oder allgemein eine vereinfachte Schaumstoffherstellung möglich machen, auch unter Vermeidung von Toxizität durch Isocyanate.

Die Lösung gemäß der Erfindung besteht darin, dass Schaumstoffsysteme und/oder insbesondere Schaumstoff-Kits vorgesehen werden, bei denen (mindestens) eine für die Schaumstoffherstellung vorgesehene Komponente alkoxysilanterminierte Präpolymeren beinhaltet und die zusätzlich ein oder mehrere weitere Komponenten umfassen mit der Maßgabe, dass in mindestens zwei aller vorstehend genannten Komponenten (zumindest vor der Verwendung durch ihre Vermischung, z.B. am oder in der Nähe vom Einsatzort, voneinander durch Vorliegen in voneinander separaten Komponenten) getrennt) mindestens zwei Reaktanden vorgesehen sind, die bei Kontakt miteinander (z.B. durch Mischung der Komponenten) eine Gasbildung bewirken (können). Werden derartige Schaumstoff-Kits (nachfolgend auch einfach als "Kits" bezeichnet) oder Schaumstoffsysteme bestimmungsgemäß verwendet, kommt es bei Kontakt der Reaktanden zur Gasbildung und damit einem Aufschäumen.

Die Erfindung betrifft auch die Verwendung von zwei oder mehr Reaktanden (insbesondere von zwei Reaktanden), die bei Kontakt miteinander eine Gasbildung bewirken (können), zur Herstellung von Schaumstoffen, welche beinhaltet, dass Mischungen der besagten Reaktanden und alkoxysilanterminierter Präpolymere hergestellt werden. Hierbei tritt dann ein Aufschäumen ein.

Die Erfindung betrifft in einer weiteren Ausführungsform auch die Verwendung von alkoxysilanterminierten Präpolymeren und mindestens zwei Reaktanden, die bei Kontakt miteinander eine Gasbildung bewirken können, zur Herstellung von (ebenfalls erfindungsgemäßen) Schaumstoffsystemen und/oder erfindungsgemäßen Kits, wobei die genannten Komponenten derart in voneinander getrennte Kompartimente eingebracht werden, dass eine Schaumstoffbildung (unter anderem mit Aushärtung und Gasbildung) erst erfolgen kann, wenn die Komponenten miteinander vermischt und so in Kontakt gebracht werden.

Schließlich betrifft die Erfindung auch ein Verfahren zur Schaumstoffherstellung, bei dem die Komponenten eines vor- und nachstehend beschriebenen Schaumstoffsystems und/oder Kits am oder nahe dem Anwendungsort miteinander vermischt werden und die Mischung am gewünschten Ort (beispielsweise in eine Spalte, in einen Hohlraum oder auf eine Fläche) ein- oder aufgebracht wird.

Zu den herausragenden Vorteilen der Ausführungsformen gemäß der Erfindung gehört, dass Wasser in einer anderen Komponente als derjenigen, welche die alkoxysilanterminierten Präpolymeren beinhaltet, vorgesehen sein kann und so bei der zur Anwendung gehörenden Vermischung gleichmäßig beigemischt werden kann. So kann eine schnellere und gleichmäßigere Aushärtung erreicht werden als wenn nur die Luftfeuchtigkeit oder andere Feuchtigkeit von außen die Polymerisierung bewirken. Wegen der Freiheit von Treibgasen ist eine unkomplizierte Entsorgung möglich. Die Verarbeitung ist möglich auch über Kopf, da, anders als bei üblichen Schaumsprays, kein verflüssigtes Treibgas vorhanden ist, was erfordert, dass Spraydosen für herkömmliche Polyurethanschäume oft so gehalten werden müssen, dass die Schaummasse unterhalb des verflüssigten Treibgases zu liegen kommt und so ausgetrieben wird (sonst würde nur die Treibgaskomponente ausgetrieben). Bei den neuen Schaumstoffsystemen und/oder insbesondere Kits und deren Verwendung dagegen ist ein Vorhandensein von bereits fertig vorgelegten Treibmitteln nicht erforderlich, so dass deren Inhalt auch nach oben ausgetrieben werden kann. Besondere Vorkehrungen zur Druckstabilität müssen nicht getroffen werden. Entmischungsprobleme während der Lagerung können vermieden werden, da es möglich ist, nur eine homogene Phase bildende Bestandteile für die jeweiligen Komponenten vorzusehen. Da keine Verdampfung eines Treibmittels zur Austreibung und Schaumbildung benötigt wird, können eine gleichmäßigere Temperatur und somit eine gleichmäßigere Schaumkonsistenz auch bei längerem Austreiben und Mischen erzielt werden.

Als Reaktanden, die bei Kontakt miteinander eine Gasbildung bewirken, können zwei oder mehr Verbindungen Verwendung finden, die bei Kontakt (z.B. bei direkter Berührung oder mindestens teilweiser Vermischung) chemisch reagieren unter Freisetzung mindestens eines Gases. Bevorzugt sind dabei Paare von entsprechenden Reaktanden (z.B. Reaktand A und Reaktand B als zueinander gehörige, d.h. miteinander unter Gasbildung reaktionsfähige Reaktanden), also Zwei-Reaktanden-Systeme, doch können auch mehr als zwei Reaktanden vorgesehen sein, die jeweils bei Kontakt miteinander gemeinsam ein Gas oder ein Gemisch von Gasen bilden.

Beispiele für geeignete Reaktanden für die Gasbildung zum Aufschäumen sind insbesondere Carbonate, vor allem Metall- oder (insbesondere quaternäre) Ammoniumcarbonate als Reaktand A; und ein oder mehrere Säuren als Reaktand B (kohlensäurebildende Reaktandenpaare). Die Reaktion bei In-Kontakt-Bringen der Reaktanden findet dann beispielsweise wie oder analog wie in folgendem Beispiel statt:

Na₂CO₃ + 2 H⁺ -> 2 Na⁺ + H₂O + CO₂(↑)

Als Carbonate können Carbonate von ein-, zwei- oder mehrwertigen Metallen, wie Alkali- oder Erdalkalimetallen, z.B. Calciumcarbonat, Magnesiumcarbonat, Lithiumcarbonat, Natriumcarbonat, Kaliumcarbonat oder carbonathaltige Zemente, oder quartäre Ammoniumcarbonate, oder Gemische von zwei oder mehr solchen Carbonaten verwendet werden. Quaternäre Ammoniumcarbonate sind beispielsweise Tetraalkylammoniumcarbonate. Auch verwendbar, aber weniger bevorzugt ist Ammoniumcarbonat (wegen der Azidität), das jedoch beispielsweise in einer von den alkoxysilanterminierten Präpolymeren separaten Komponente eines erfindungsgemäßen Kits vorgesehen sein kann oder (sofern die Azidität nicht zur Katalyse von deren Aushärtung reicht) ferner auch in einer Komponente mit entsprechend weniger reaktiven akoxysilanterminierten Präpolymeren.

Als Säuren kommen organische oder anorganische Säuren in Betracht, wie Schwefelsäure, Salzsäure, Phosphorsäure, Polyphosphorsäuren, organische mono- oder polymere Mono- oder Di- oder Polycarbonsäuren, wie Essigsäure, Trifluoresseigsäure, Fumarsäure, Maleinsäure, Citronensäure oder dergleichen, oder organische Sulfon- oder Phosphonsäuren oder organische Sulfate (wie Dodecylschwefelsäure), oder Mischungen von zwei oder mehr solchen Säuren.

Da alkoxysilanterminierte Präpolymere oftmals schon durch Säurekatalyse mit Wasser aushärten (z.B. polymerisieren, allgemeiner unter Polyreaktion) können, werden erfindungsgemäße Zwei- oder Mehr-Komponenten-Kits bevorzugt, bei denen Säure (ggf. mit Wasser) und alkoxysilanterminiertes Präpolymer (vorzugsweise gemeinsam mit dem Carbonat) in getrennten Komponenten vorliegen, während das Carbonat in derselben Komponente wie die alkoxysilanterminierten Präpolymeren vorgesehen sein kann.

Möglich anstelle der Verwendung von Carbonaten (sowohl bei erfindungsgemäßen Schaumstoffsystemen, vor allem aber erfindungsgemäßen Kits) ist auch die Verwendung von Hydrogencarbonaten, wobei (wegen deren geringer Azidität) diese mindestens bei reaktionsfähigeren alkoxysilanterminierten Präpolymeren vorzugsweise in mindestens einer von der die Präpolymeren beinhaltenden Komponente verschiedenen Komponente vorgesehen sind.

Weitere erfindungsgemäß einsetzbare Reaktandenpaare, die bei Kontakt eine Gasbildung bewirken (können), sind beispielsweise:

Peroxide als Reaktand A und geeignete (aus Peroxiden sauerstoffreisetzende) Koreaktanden als Reaktand B, z.B. bei H₂O₂ als Reaktand A Mangandioxid als Reaktand B (Koreaktand), wobei bei Kontakt die folgende Reaktion ablaufen kann 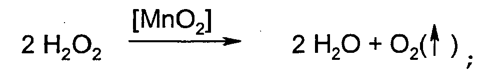 bei organischen Peroxodisäuren als Rektand A als Reaktanden B Amine oder geeignete Schwermetallsalze wie z.B. Fe²⁺, CO²⁺ und/oder Mn²⁺-Salzen, z.B. als Reaktand A Diacetylperoxid, Benzoylperoxid, Bis(4-chlorbenzoyl)peroxid, tert-Butylperbenzoat oder dergleichen, als Koreaktanden, die wie oder analog wie folgt reagieren können: 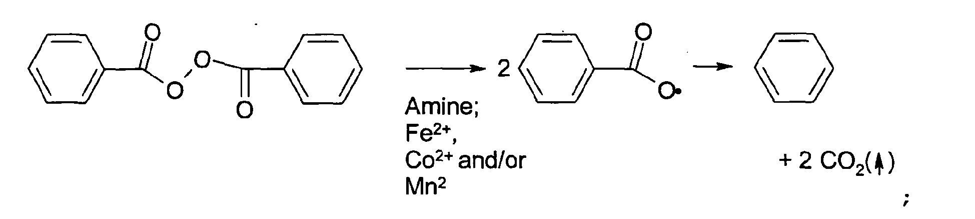 unedle Metalle als Reaktand A und Säuren oder Basen als Reaktand B, z.B.

- Aluminium als Reaktand A und Basen (z.B. ein oder mehrere Alkalimetallhydroxide, wie Natrium-, Kalium- oder Lithiumhydroxid) als Reaktand B, wobei die Gasbildungsreaktion nach folgender Formel abläuft:

2 Al + 2 OH⁻ + 6 H₂O -> 2 [Al(OH)₄]⁻ + 3 H₂(↑),

oder ein oder mehrere unedle Metalle (insbesondere Eisen oder Zink) als Reaktand A und ein oder mehrere Säuren, wie oben definiert bei den Carbonaten (vorzugsweise anorganische Säure), als Reaktand B, wobei die Gasbildung wie oder analog wie nachfolgend dargestellt erfolgt:

Zn + 2 HCl -> ZnCl₂ + H₂ (↑) ;

Carbide, insbesondere Calciumcarbid als Reaktand A und Wasser als Reaktand B, wobei bei Kontakt als Gas Ethin gebildet wird nach folgender Formel:

CaC₂ + 2 H₂O -> Ca(OH)₂ + H≡CH (↑);

Azoverbindungen, insbesondere aliphatische Azoverbindungen, wie α,α'-Azoisobutyronitril oder Azo-tert-butan, das nach folgender Formel reagieren kann unter N₂-Freisetzung: 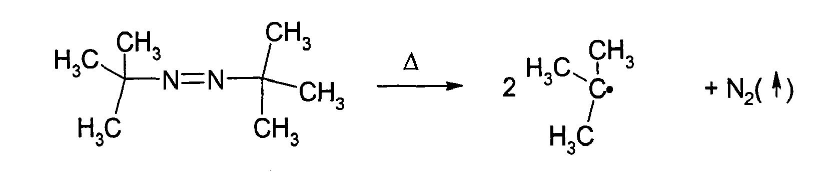 wobei als Reaktand B vorzugsweise geeignete Katalysatoren Einsatz finden;

Metallhydride und Wasser, wie Natriumhydrid oder Lithiumaluminiumhydrid, die wie oder analog wie folgt unter Wasserstofffreisetzung reagieren können:

LiAlH₄ + 4 H₂O -> LiOH + Al(OH)₃ + 4 H₂ (↑);

oder dergleichen, wobei auch zwei oder mehr der Reaktionen vorgesehen sein können.

Bei den erfindungsgemäßen Kits sind Wasser, falls dieses einer der Bestandteile eines solchen Kits ist, und eine Säure oder Base vorzugsweise in einer Komponente vorgesehen, bei Zwei-Komponenten-Kits vorzugsweise in einer von alköxysilanterminierten Präpolymeren freien Komponente, wobei alkoxysilanterminierte Präpolymeren vorzugsweise in einer Komponente zusammen mit dem anderen gasbildenden Reaktanden (beispielsweise oder insbesondere einem Carbonat) vorgesehen sein können.

Kohlendioxidbildende Reaktandenpaare sind besonders bevorzugt, auch, da CO₂ besonders vorteilhaft ist (z.B. aufgrund geringer Toxizität, fehlender Brennbarkeit, geringer Diffusion wegen des relativ hohen Molekulargewichts und damit höherer Stabilität der Schaumblasen während des Aushärtens).

Wie dargelegt, betrifft die Erfindung Schaumstoffsysteme, wie oben beschrieben, wie sie beispielsweise bei der Verwendung (beispielsweise zum Ausfüllen eines Hohlraums oder dergleichen) aus den Komponenten direkt vor Ort hergestellt werden (können). Bevorzugt sind dabei jedoch erfindungsgemäße Kits, welche die Herstellung entsprechender Schaumstoffsystemen direkt vor Ort ermöglichen.

Bei solchen Kits handelt es sich vorzugsweise um Zwei- oder Mehrkomponenten-Kits, die zwei oder mehr für die Schaumstoffherstellung vorgesehene Komponenten beinhalten, wobei mindestens, vorzugsweise höchstens eine solche Komponente alkoxysilanterminierte Präpolymeren beinhaltet, und die zusätzlich ein oder mehrere weitere Komponenten umfassen mit der Maßgabe, dass in mindestens zwei aller vorstehend genannten Komponenten (vor der Verwendung = Mischung am (= in der Nähe oder im) Einsatzort) voneinander getrennt mindestens zwei Reaktanden vorgesehen sind, die bei Kontakt miteinander eine Gasbildung bewirken (können, d.h. erst nach In-Kontakt-Bringen oder insbesondere Mischung der Komponenten bei der Verwendung eine solche Gasbildung bewirken). Unter einem derartigen Zwei- oder Mehrkomponentenkit ist insbesondere ein solches zu verstehen, welches zwei oder mehr, lösbar oder fest miteinander verbundene und/oder ineinander verschachtelte Behältnisse umfasst, die jeweils eine der genannten Komponenten, so von den übrigen Komponenten getrennt, dass die Komponenten nicht in Kontakt treten können, beinhalten. Dies ermöglicht, die Komponenten zur Herstellung eines Schaumstoffes am gewünschten Einsatzort so zu vermischen und erforderlichenfalls einzubringen, dass dort die Bildung eines Schaumstoffes erfolgen kann. Beispiele für derartige Zwei- oder Mehrkomponentenkits (wobei generell Zwei-Koponentenkits besonders bevorzugt sind) sind Zweikammer-Kartuschen für die einzusetzenden Komponenten mit ((z.B. koaxial) ineinander oder vorzugsweise (z.B. parallel) nebeneinander angeordneten) lösbar oder vorzugsweise fest mteinander verbundenen Behältnissen mit Kammern zur separaten Aufnahme der Komponenten, beispielsweise in Kombination mit Auspressgeräten, wie Ausdrückpistolen, und/oder Statikmischern oder Düsen oder Kanülen zum Auspressen und Mischen der Komponenten. Auch Folienbeutel mit zwei oder mehr Kammern, jeweils für eine der unterschiedlichen Komponenten, sind möglich. Alternativ können die Behältnisse für die Komponenten auch in einem Gebinde vereinigt sein oder separat vorliegen mit Hinweisen, dass sie jeweils mit solchen Behältnissen zu verwenden sind, die andere Komponenten eines erfindungsgemäßen Kits oder Schaumstoffsystems beinhalten, die ebenfalls mit solchen Hinweisen versehen sein können - die Mischung kann dann zum Beispiel durch Ausbringen (z.B. Ausdrücken) der Komponenten in ein Gefäß, beispielsweise einen Eimer oder Becher, und anschließendes Vermischen, z.B. durch Rühren, erfolgen, wobei entsprechende Ausdrückvorrichtungen, Gefäße und/oder Rührvorrichtungen ebenfalls Bestandteil eines erfindungsgemäßen Kits sein können.

"Umfassen" oder "beinhalten" bedeutet, dass die entsprechenden Erfindungsgegenstände die genannten Bestandteile und daneben noch weitere Bestandteile enthalten können, ist also als nicht abschließend beschreibend zu verstehen. "Enthalten" bedeutet dagegen, dass die damit im Zusammenhang beschriebenen Bestandteile abschließend aufgezählt sind, also keine weiteren Bestandteile mehr vorliegen können.

Als alkoxysilanterminerten Präpolymere für erfindungsgemäße Schaumstoffsysteme, Kits oder Verwendungen sind insbesondere die in den oben diesbezüglich genannten und durch Bezugnahme aufgenommenen Patentschriften genannten alkoxy-, insbesondere C₁-C₇-alkoxysilanterminierten Präpolymeren zu erwähnen.

Vorzugsweise handelt es sich bei den Präpolymeren um α-Aminosilane, wie sie beispielsweise in der (hier erneut bezüglich der Verbindungen (Verbindungsklassen und Einzelverbindungen) und deren Herstellung durch Bezugnahme aufgenommenen) Patentschriften WO 2004/00214, WO 2004/005156 und/oder WO 2005/000931 genannt sind.

Sehr bevorzugt sind (insbesondere ein mit der CAS-Nr. 611222-18-5 zugänglicher) Dimethoxy(methyl)silylmethylcarbamat- oder - harnstoff-terminierter Polyether der allgemeinen Formel (I), 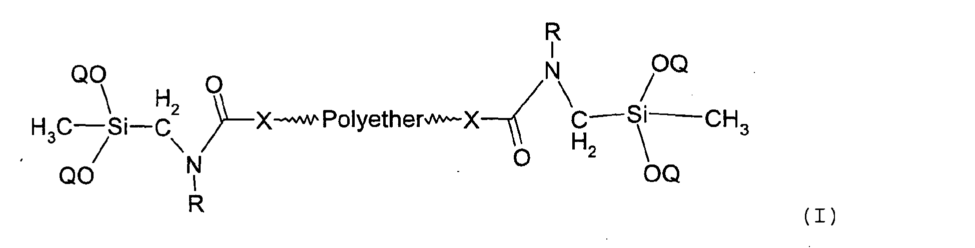 worin "Polyether" für einen (vorzugsweise jeweils am Endbereich) über eine Bindung an das in Formel I gezeigte X gebundenen zweibindigen Polyetherrest (insbesondere -Polyethylen- oder vorzugsweise -Polypropylen-) oder einen Polyetherrest beispielsweise herstellbar wie in WO 2005/000931 oder in DE 101 40 132 gezeigt, steht, Q für C₁-C₂₀-Alkyl, insbesondere Methyl, R für Wasserstoff, C₁-C₂₀-Alkyl (bevorzugt), C₁-C₂₀-Alkenyl, C₃-C₁₀-Cycloalkyl, C₆-C₁₀-Aryl (insbesondere Phenyl), C₃-C₁₀-Cycloalkyl-C₁-C₁₀-alkyl oder C₆-C₁₀-aryl-C₁-C₁₀-alkyl steht und X für O (bevorzugt) oder für NR steht, worin R wie oben definiert ist.

Ebenfalls besonders bevorzugt sind dimethoxy(methyl)silylmethylcarbamat-terminierte Oligo- oder Polyurethan-Derivate der Formel II, 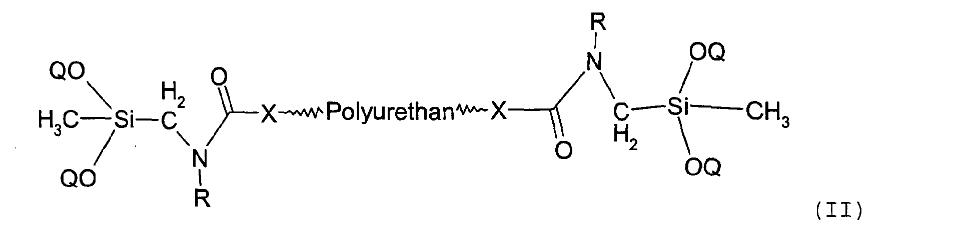 worin "Polyurethan" für einen an jedem Ende über eine Doppelbindung an das in Formel II gezeigte X gebundenen zweibindigen Polyurethanrest steht, der gewünschtenfalls auch Halogenreste (beispielsweise einführbar über halogenierte Polyole bei der Oligo- oder Polyurethanherstellung aus Isocyanaten und Polyolen) tragen kann, um die Flammsicherheit zu erhöhen, z.B. wie in WO 2005/000931 oder WO 2004/083271 gezeigt, und Q, R und X wie unter Formel I definiert sind.

Auch Mischungen von alkoxysilanterminierten Präpolymeren, wie beispielsweise auch solchen der Formeln I und/oder II, sind bevorzugt.

Vorzugsweise umfasst eine oder bei mehreren solchen Komponenten jede Komponente, welche ein alkoxysilanterminiertes Präpolymer enthält, einen Wasserfänger, wie z.B. Trimethoxysilylmethyl-0-methyl-carbamat, um ein vorzeitiges Aushärten vor dem Mischen zu vermeiden.

Weitere mögliche Zusätze in den Komponenten umfassen beispielsweise Weichmacher (beispielsweise in einem Gewichtsanteil von 20 bis 50 % bezogen auf die Masse aller Schaumstoff-Komponenten), wie Phthalatester oder Polyether, Thixotropiermittel (beispielsweise in einem Gewichtsanteil von 1 bis 10 % bezogen auf die Masse aller Schaumstoff-Komponenten), wie pyrogene Kieselsäure oder Polyamidwachs, Füllstoffe (beispielsweise in einem Gewichtsanteil von 2 bis 50 % bezogen auf die Masse aller Schaumstoff-Komponenten), wie Titandioxid, Sand oder dergleichen nichtreaktives partikuläres Material, Antioxidantien und/oder Licht- oder UV-Stabilisatoren (beispielsweise in einem Gewichtsanteil von 0,005 bis 5 % bezogen auf die Masse aller Schaumstoff-Komponenten), wie Phenolderivate, HALS-Stabilisatoren, Haftvermittler (beispielsweise in einem Gewichtsanteil von 0,5 bis 5 % bezogen auf die Masse aller Schaumstoff-Komponenten), wie organofunktionelle Silane, Katalysatoren (beispielsweise in einem Gewichtsanteil von 0,01 bis 5 % bezogen auf die Masse aller Schaumstoff-Komponenten), wie Säuren, Amine, Aminosilane, organische Zinnverbindungen wie Dibutylzinnlaurat, Titanate und/oder Eisen(III)-Verbindungen, Flammschutzmittel (beispielsweise in einem Gewichtsanteil von 0,01 bis 10 % bezogen auf die Masse aller Schaumstoff-Komponenten), wie Phosphate oder Phosphonate, halogenierte und halogenfreie Phosphorsäureester, halogenierte Polyester, Polyole oder Chlorparaffine, Schaumstabilisatoren, wie polyethermodifizierte Siloxane, und/oder Reaktivverdünner (beispielsweise in einem Gewichtsanteil von 0,01 bis 10 % bezogen auf die Masse aller Schaumstoff-Komponenten), wie niedermolekulare Verbindungen mit geringer Viskosität (vorzugsweise höchstens 5 Pas bei 20 °C), die über reaktive Alkoxysilylgruppen verfügen vorzugsweise mit hinreichend hoher Gewichtsdichte an vernetzbaren Alkoxysilylgruppen, so dass sie während der Härtung in das entstehende Netzwerk eingebaut werden können, ohne die Netzwerkdichte zu erniedrigen, z.B. solche der Formel III 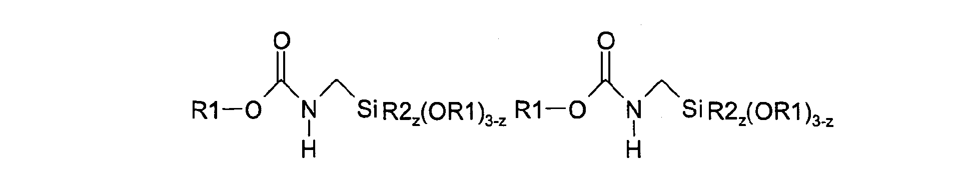 worin R1 einen Alkylrest mit 1 bis 2 Kohlenstoffatomen oder einen omega-Oxyalkylrest mit insgesamt 2-10 Kohlenstoffatomen bedeutet, R2 einen C₁-C₁₀-Alkyl, C₃-C₁₀-Cycloalkyl, C₁-C₁₀-Alkenyl- oder C₆-C₁₀-Arylrest bedeutet und z 0 oder 1 ist.

Dabei werden diese Bestandteile vorzugsweise so auf die zwei oder mehr Komponenten eines erfindungsgemäßen Kits oder Schaumstoffsystems aufgeteilt, dass sie vor dem Mischen keine störenden Reaktionen (wie verfrühte Polymerisation oder Aufschäumen) verursachen. Dem Fachmann ist bekannt, wie er die Aufteilung von derartigen Zusätzen/Bestandteilen auf unterschiedliche Komponenten vornehmen kann, um solche unerwünschten Ereignisse zu vermeiden.

Bevorzugte Ausführungsformen der Erfindung finden sich in den Ansprüchen, vorzugsweise in den Unteransprüchen. Die Ansprüche werden hier durch Bezugnahme aufgenommen. Stärker bevorzugte Ausführungsformen der Erfindung ergeben sich auch, wenn einer, mehrere oder alle allgemeineren darin verwendeten Ausdrücke durch vor- oder nachstehend definierte spezifischere Definitionen ersetzt werden. Besonders bevorzugte Ausführungsformen der Erfindung finden sich auch in den Beispielen.

### Beispiele:

Die nachfolgenden Beispiele dienen der Illustration der Erfindung, ohne ihren Umfang einzuschränken.

### Beispiel 1: Schaumstoffsystem

Nachfolgend werden die Gewichts-Teile angegeben, aus denen die Komponenten für ein erfindungsgemäßes Schaumstoffsystem bestehen (die entsprechenden Komponenten werden durch Mischen der genannten Bestandteile hergestellt):

### Komponente 1:

| | |
|---|---|
| Geniosil SLM 414000* | 70 Teile |
| Dibutylzinndilaurat | 1 Teil |
| Silbyk 9210** | 2 Teile |
| Calciumcarbonat | 6 Teile |

*) Geniosil SLM 414000 ist ein dimethoxy(methyl)silylmethylcarbamat-terminierter Polyether der Firma Wacker Chemie, München, Deutschland, der Formel I, worin X für O und R für Wasserstoff steht (CAS-Nr. 611222-18-5)
**) Silbyk 9210 ist ein Polyether-modifiziertes Polysiloxan der zur Altana Chemie AG, Wesel, Deutschland gehörenden BYK-Chemie GmbH.

### Komponente 2:

| | |
|---|---|
| Wasser | 8 Teile |
| Zitronensäure, Monohydrat | 13 Teile |

### Beispiel 2: Zwei-Komponenten-Kit

Die Komponenten aus Beispiel 1 werden einzeln in jeweils eine Kammer einer Zwei-Kammer-Kartusche gefüllt und die Kammern verschlossen. Die Kartusche eignet sich zum Anbringen eines Statik-Mischers, der zum Kit gehören kann.

### Beispiel 3: Anwendung eines Schaumstoffsystems

Die Komponenten des Schaumstoffsystems werden gemischt und mit einem Spachtel in einen Hohlraum eingebracht. Es kommt zu einem Aufschäumen und unter Aushärtung zur Bildung eines Schaumstoffes.

### Beispiel 4 : Anwendung eines Zwei-Komponenten-Kits

Mittels einer Drückpistole werden die Komponenten des Zwei-Komponenten-Kits aus Beispiel 2 durch einen Statikmischer ausgetrieben und darin vermischt und in einen auszufüllenden Hohlraum ausgetrieben. Unter Aufschäumen und Aushärten entsteht dort ein Schaumstoff.

## Patentansprüche

1. Schaumstoffsysteme und/oder Schaumstoff-Kits, jeweils mit zwei oder mehr Komponenten, bei denen mindestens eine für die Schaumstoffherstellung vorgesehene Komponente alkoxysilanterminierte Präpolymeren beinhaltet und die zusätzlich ein oder mehrere weitere Komponenten umfassen mit der Maßgabe, dass in mindestens zwei aller vorstehend genannten Komponenten mindestens zwei - vor einer Vermischung bei der Verwendung voneinander durch. Zuordnung zu unterschiedlichen Komponenten getrennte Reaktanden vorgesehen sind, die bei Kontakt miteinander eine Gasbildung bewirken können.

2. Schaumstoffsysteme und/oder Schaumstoff-Kits nach Anspruch 1, wobei die vor der Verwendung am Einsatzort voneinander getrennten Reaktanden, die bei Kontakt miteinander eine Gasbildung bewirken können, einen Reaktanden A und einen Reaktanden B umfassen, die gemeinsam ein Zwei-Reaktanden-System bilden, welches aus folgenden Reaktandenpaaren ausgewählt ist:
Reaktand A = Carbonat, insbesondere Metall-, insbesondere Calcium-, oder quaternäres Ammoniumcarbonat, und/oder carbonathaltiger Zement, Reaktand B = Säure;
Reaktand A = Peroxid, Reaktand B = aus Peroxiden sauerstoffreisetzender Koreaktand;
Reaktand A = unedles Metall und Reaktand B = Base oder Säure, insbesondere Reaktand A = Aluminium und Reaktand B = Base oder Reaktand A = unedles Metall und Reaktand B = Säure;
Reaktand A = Carbid, insbesondere Calciumcarbid, und Reaktand B = Wasser
Reaktand A = Azoverbindung und Reaktand B = Katalysator; und
Reaktand A = Metallhydrid und Reaktand B = Wasser.

3. Schaumstoffsystem und/oder Kit nach einem der Ansprüche 1 oder 2, mit zwei Komponenten, deren eine einen der Reaktanden, die bei Kontakt miteinander eine Gasbildung bewirken können, als Reaktand A und alkoxysilanterminierte Präpolymeren umfasst, während die andere den mit dem Reaktanden A unter Gasbildung reaktionsfähigen Reaktanden als Reaktanden B umfasst.

4. Schaumstoffsystem und/oder Kit nach einem der Ansprüche 1 bis 3 mit zwei Komponenten, wobei die eine Komponente alkoxysilanterminierte Präpolymeren umfasst, die andere Wasser und einen Katalysator für die Aushärtung umfasst.

5. Schaumstoffsystem und/oder insbesondere Kit nach einem der Ansprüche 1 bis 4 mit zwei Komponenten, wobei eine der Komponenten alkoxysilanterminierte Präpolymeren und als Reaktanden ein Carbonat, insbesondere ein Metallcarbonat, umfasst, während die andere Komponente Wasser und als Reaktanden eine Säure umfasst.

6. Schaumstoffsystem und/oder insbesondere Kit nach einem der Ansprüche 1 bis 5, wobei die alkoxysilanterminierten Präpolymeren α-Aminosilane sind, insbesondere solche der Formel I, 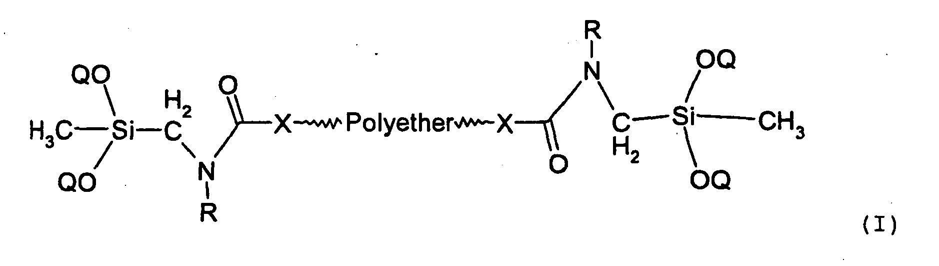 worin "Polyether" für einen vorzugsweise jeweils am Endbereich über eine Bindung an das in Formel I gezeigte X gebundenen zweibindigen Polyetherrest steht, Q für C₁-C₂₀-Alkyl, insbesondere Methyl, R für Wasserstoff, C₁-C₂₀-Alkyl, C₁-C₂₀-Alkenyl, C₃-C₁₀-Cycloalkyl, C₆-C₁₀-Aryl, C₃-C₁₀-Cycloalkyl-C₁-C₁₀-alkyl oder C₆-C₁₀-aryl-C₁-C₁₀-alkyl steht und X für O oder für NR steht, worin R wie oben definiert ist;
oder der Formel II, 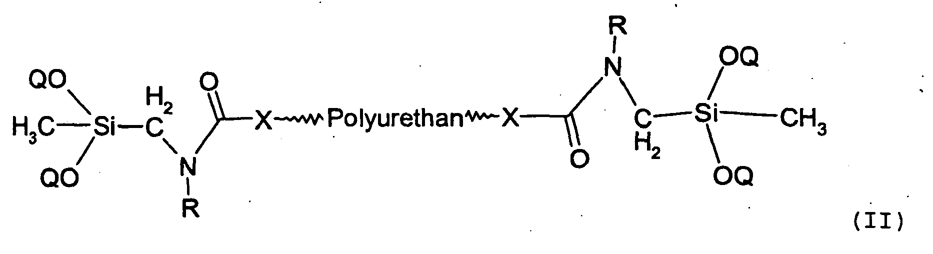 worin "Polyurethan" für einen an jedem Ende über eine Doppelbindung an das in Formel II gezeigte X gebundenen zweibindigen Polyurethanrest, der gewünschtenfalls auch Halogenreste tragen kann, steht, und Q, R und X wie unter Formel I definiert sind;
oder Mischungen von zwei oder mehr solchen Präpolymeren der Formel I und/oder der Formel II beinhalten, insbesondere sind.

7. Schaumstoffsystem und/oder insbesondere Kit nach einem der Ansprüche 1 bis 6 mit zwei Komponenten, wobei jede der Komponenten ein oder mehrere weitere Zusätze ausgewählt aus Weichmachern, Thixotropiermitteln, Füllstoffen, Antioxidantien, Licht- oder UV-Stabilisatoren, Haftvermittler, Katalysatoren, Flammschutzmittel, Schaumstabilisatoren und Reaktivverdünner umfasst.

8. Verwendung von zwei oder mehr Reaktanden, die bei Kontakt miteinander eine Gasbildung bewirken können, insbesondere von einem der in Anspruch 2 genannten Reaktandenpaare, bei der Herstellung von Schaumstoffen, wobei Mischungen hergestellt werden, welche die besagten Reaktanden und alkoxysilanterminierte Präpolymere, insbesondere wie in Anspruch 6 genannt, umfassen.

9. Verwendung von alkoxysilanterminierten Präpolymeren, insbesondere wie in Anspruch 6 genannt, und mindestens zwei Reaktanden, die bei Kontakt miteinander eine Gasbildung bewirken können, insbesondere einem der in Anspruch 2 genannten Reaktandenpaare, zur Herstellung von einem Schaumstoffsystem und/oder Kit nach einem der Ansprüche 1 bis 7, wobei die genannte Komponenten derart in voneinander getrennte Kompartimente eingebracht werden, dass eine Schaumstoffbildung unter anderem mit Aushärtung und Gasbildung erst erfolgen kann, wenn die Komponenten miteinander vermischt und so in Kontakt gebracht werden.

10. Verfahren zur Schaumstoffherstellung, bei dem die Komponenten eines Schaumstoffsystems und/oder Kits nach einem der Ansprüche 1 bis 7 am oder nahe dem Anwendungsort miteinander vermischt werden und die Mischung am gewünschten Ort ein- und/oder aufgebracht wird.

## Claims

1. Foam material systems and/or foam material kits, each having two or more components, in which at least one component provided for the foam material production includes alkoxysilane-terminated prepolymers and which additionally comprise one or more further components, with the proviso that in at least two of all the above-mentioned components there are provided at least two reactants which - prior to their being mixed for use - are separated from one another by being assigned to different components, which reactants, on contact with one another, can effect gas formation.

2. Foam material systems and/or foam material kits according to claim 1, wherein the reactants which are separated from one another prior to use at the site of use, which reactants can effect gas formation on contact with one another, comprise a reactant A and a reactant B which together form a two-reactant system which is selected from the following pairs of reactant:
reactant A = carbonate, especially mental carbonate, especially calcium carbonate, or quaternary ammonium carbonate, and/or carbonate-containing cement, reactant B = acid;
reactant A = peroxide, reactant B - co-reactant that releases oxygen from peroxides;
reactant A = base metal and reactant B = base or acid, especially reactant A = aluminium and reactant B = base or reactant A = base metal and reactant B = acid;
reactant A = carbide, especially calcium carbide, and reactant B = water;
reactant A = azo compound and reactant B = catalyst; and
reactant A = metal hydride and reactant B = water.

3. Foam material system and/or kit according to either one of claims 1 and 2 having two components, one of which comprise one of the reactants which, on contract with one another, can effect gas formation as reactant A and alkoxysilane-terminated prepolymers, while the other comprises the reactant capable of reacting with the reactant A to form gas as reactant. B.

4. Foam material system and/or kit according to any one of claims 1 to 3 having two components, wherein one component comprises alkoxysilane-terminated prepolymers and the other comprises water and a catalyst for the hardening.

5. Foam material system and/or, especially, kit according to any one of claims 1 to 4 having two components, wherein one of the components comprises alkoxysilane-terminated prepolymers and, as reactant, a carbonate, especially a metal carbonate, while the other component comprises water and, as reactants, an acid.

6. Foam material system and/or, especially, kit according to any one of claims 1 to 5, wherein the alkoxysilane-terminated prepolymers are α-aminosilanes, especially those of the formula I 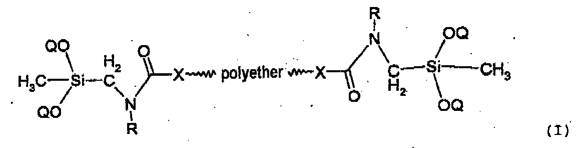 wherein "polyether" is a divalent polyether radical bonded preferably in each case in an end region by means of a bond to the X shown in formula I, Q is C₁₋C₃₀alkyl, especially methyl, R is hydrogen, C₁-C₂₀alkyl, C₁-C₂₀alkenyl, C₃-C₁₀cycloalkyl, C₆-C₁₀-aryl, C₃-C₁₀ cycloalkyl-C₁-C₁₀ alkyl or C₆-C₁₀aryl-C₁-C₁₀alkyl and X is O or NR, wherein R is as defined above;
or of the formula II 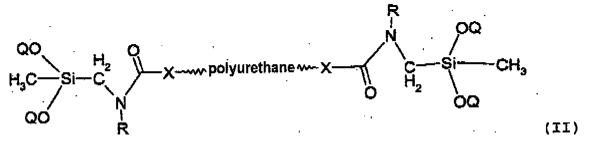 wherein "polyurethane" is a divalent polyurethane radical bonded at each end by means of a double bond to the X shown in formula II, which polyurethane radical can, if desired, also carry halogen radicals, and Q, R and X are as defined under formula I;
or include, or especially are, mixtures of two or more such prepolymers of the formula I and/or formula II.

7. Foam material system and/or, especially, kit according to any one of claims 1 to 6 having two components, wherein each of the components comprises one or more further additives selected from plasticisers, thixotropic agents, fillers, antioxidants, light stabilisers or UV stabilisers, adhesion promoters, catalysts, flame-proofing agents, foam stabilisers and reactive diluents.

8. Use of two or more reactants that can effect gas formation on contact with one another, especially one of the pairs of reactants mentioned in claim 2, in the production of foam materials, there being produced mixtures which comprise the said reactants and alkoxysilane-terminated prepolymers, especially as mentioned in claim 6.

9. Use of alkoxysilane-terminated prepolymers, especially as mentioned in claim 6, and at least two reactants that can effect gas formation on contact with one another, especially one of the pairs of reactants mentioned in claim 2, in the production of a foam material system and/or kit according to any one of claims 1 to 7, wherein the said components are introduced into separate compartments in such a way that foam material formation can take place, *inter alia* with hardening and gas formation, only when the components are mixed with one another and thus brought into contact with one another.

10. Method of producing foam material, in which the components of a foam material system and/or kit according to any one of claims 1 to 7 are mixed with one another at or close to the site of use and the mixture is introduced and/or applied at the desired site.

## Revendications

1. Systèmes de substances alvéolaires et/ou kits de substances alvéolaires, respectivement à deux ou plusieurs composantes, dans le cas desquels au moins une composante prévue pour la fabrication des substances alvéolaires inclut les prépolymères à terminaison alkoxysilane et qui comprennent en plus un ou plusieurs composantes supplémentaires, sous réserve que, dans au moins deux de toutes les composantes citées ci-dessus, on prévoit - avant un mélange lors de l'utilisation - au moins deux réactants séparés l'un de l'autre par attribution à des composantes différentes, qui peuvent provoquer, en cas de contact l'un avec l'autre, une formation de gaz.

2. Système de substances alvéolaires et/ou kits de substances alvéolaires selon la revendication 1, les réactants séparés l'un de l'autre avant l'utilisation à l'endroit d'usage, qui peuvent causer en cas de contact les uns avec les autres une formation de gaz, comprenant un réactant A et un réactant B, qui forment ensemble un système à deux réactants, qui est sélectionnée parmi les paires de réactants suivantes :
Réactant A = carbonate, en particulier carbonate métallique, en particulier carbonate de calcium ou d'ammonium quaternaire et/ou ciment contenant des carbonates, réactant B = acide ;
Réactant A = peroxyde, réactant B = co-réactant libérant de l'oxygène provenant de peroxydes ;
Réactant A = métal non précieux et réactant B = base ou acide, en particulier réactant A = aluminium et réactant B =base ou réactant A = métal non précieux et réactant B = acide;
Réactant A = carbure, en particulier carbure de calcium et réactant B = eau ;
Réactant A = composé azoïque et réactant B = catalyseur ; et
Réactant A = hydrure métallique et réactant B = eau.

3. Système de substances alvéolaires et/ou kits selon l'une quelconque des revendications 1 ou 2, avec deux composantes, dont l'une comprend, en tant que réactant A, un des réactants qui peuvent causer, en cas de contact l'un à l'autre une formation de gaz et des prépolyméres à terminaison alkoxysilane, alors que l'autre comprend, en tant que réactant B, les réactants capables de réaction avec le réactant A avec formation de gaz.

4. Système de substances alvéolaires et/ou kits selon l'une quelconque des revendications 1 à 3, avec deux composantes, une composante comprenant des prépolymères à terminaison alkoxysilane et l'autre comprenant de l'eau et un catalyseur pour le durcissement.

5. Système de substances alvéolaires et/ou, en particulier, kit selon l'une quelconque des revendications 1 à 4, avec deux composantes, une des composantes comprenant des prépolymères à terminaison alkoxysilane et, en tant que réactant, un carbonate, en particulier un carbonate métallique, alors que l'autre composante comprend de l'eau et, en tant que réactant, un acide.

6. Système de substances alvéolaires et/ou, en particulier kit selon l'une quelconque des revendications 1 à 5, les prépolymères à terminaison alkoxysilane étant des α-aminosilanes, en particulier ceux de la formule I, 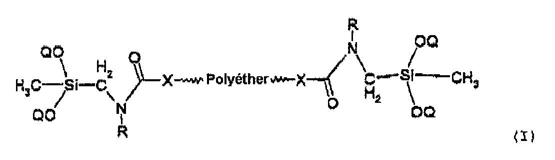 dans laquelle «polyéther» désigne un radical polyéther à deux liaisons, lié, de préférence, respectivement dans le domaine terminal, par l'intermédiaire d'une liaison, au X indiqué dans la formule 1, Q désigne un radical C₁-C₂₀-alkyle, en particulier méthyle, R désigne un hydrogène, un radical C₁-C₂₀-alkyle, C₁-C₂₀-alcényle, C₃-C₁₀-cycloalkyle, C₆-C₁₀-aryle, C₃-C₁₀-cycloalkyl-C₁-C₁₀-alkyle ou un C₆-C₁₀-aryl-C₁-C₁₀-alkyle et X représente O ou NR, R étant défini comme ci-dessus ;
ou de la formule II, 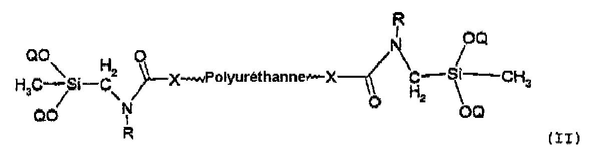 dans laquelle « polyuréthanne » désigne un radical polyuréthanne à deux liaisons, lié à chaque extrémité, par l'intermédiaire d'une liaison double, au X indiqué dans la formule II, qui peut, si on le souhaite, porter aussi des radicaux halogènes, et Q, R et X sont définis comme sous la formule I ;
ou des mélanges de deux ou plusieurs prépolymères de ce type de la formule I et/ou de la formule II.

7. Système de substances alvéolaires et/ou, en particulier, kit selon l'une quelconque des revendications 1 à 6, avec deux composantes, chacune des composantes comprenant un ou plusieurs additifs supplémentaires sélectionnés parmi les plastifiants, les agents thixotropes, les charges, les agents antioxydants, les agents de stabilisation vis-à-vis de la lumière ou des UV, les agents conférant une adhésion, les catalyseurs, les agents ignifuges, les agents de stabilisation de la mousse et les diluants de réactifs.

8. Utilisation de deux ou plusieurs réactants, qui peuvent causer, en cas de contact les uns avec les autres, une formation de gaz, en particulier d'une paire de réactants citées dans la revendication 2, lors de la fabrication de substances alvéolaires ou de mousses, des mélanges étant fabriqués, qui comprennent lesdits réactants et des prépolymères à terminaison alkoxysilane, en particulier ceux cités dans la revendication 6.

9. Utilisation de prépolyméres à terminaison alkoxysilane comme cités, en particulier, dans la revendication 6, et d'au moins deux réactants qui peuvent causer, en cas de contact l'un avec l'autre, une formation de gaz, en particulier une des paires de réactants citées dans la revendication 2, en vue de la fabrication d'un système de substances alvéolaires ou de mousses et/ou d'un kit selon l'une quelconque des revendications 1 à 7, les composantes citées étant introduites dans des compartiments séparés les uns des autres, de telle sorte qu'une formation de substances alvéolaires ne peut se produire, entre autres, avec durcissement et formation de gaz, que lorsque les composantes sont mélangées les unes aux autres et sont ainsi mis en contact.

10. Procédé en vue de la fabrication de substances alvéolaires ou de mousses, lors duquel les composantes d'un système de substances alvéolaires et/ou d'un kit selon l'une quelconque des revendications 1 à 7, sont mélangées ensemble au lieu d'application ou à proximité de celui-ci et lors duquel le mélange est introduit et/ou appliqué au lieu souhaité.
